Europäisches Patentamt

European Patent Office

Office européen des brevets

(19)

(11) Veröffentlichungsnummer: **0 091 055**
**B1**

(12) **EUROPÄISCHE PATENTSCHRIFT**

(45) Veröffentlichungstag der Patentschrift:
11.06.86

(51) Int. Cl.⁴: **C 08 G 65/44**

(21) Anmeldenummer: 83103051.5

(22) Anmeldetag: 28.03.83

(54) Verfahren zur Herstellung von Polyphenylenethern.

(30) Priorität: 07.04.82 DE 3212925

(43) Veröffentlichungstag der Anmeldung:
12.10.83 Patentblatt 83/41

(45) Bekanntmachung des Hinweises auf die Patenterteilung:
11.06.86 Patentblatt 86/24

(84) Benannte Vertragsstaaten:
BE DE FR GB NL

(56) Entgegenhaltungen:
EP - A - 0 047 428
US - A - 3 337 501

CHEMICAL ABSTRACTS, Band 72, Nr. 12, 23. März 1970,
Seite 16, Nr. 56083h, Columbus, Ohio, USA
CHEMICAL ABSTRACTS, Band 73, Nr. 12, 21. September
1970, Seite 4, Nr. 56496r, Columbus, Ohio, USA D.
LICHOTA et al.: "Poly(phenylene oxides). II. Oxidative
polymerization of 2,6-xylenol in the presence of cuprous
chloride and triethylenediamine"
CHEMICAL ABSTRACTS, Band 73, Nr. 2, 13. Juli 1970,
Seite 2, Nr. 4216e, Columbus, Ohio, USA J. BAILY:
"Two-stage oxidative polymerization of 2,6-xylenol to
high-molecular-weight poly(phenylene oxide). Synthesis
of oligomers. II. Relative activities of phenol, resols, and
xylenols"

(73) Patentinhaber: BASF Aktiengesellschaft,
Carl-Bosch-Strasse 38, D-6700 Ludwigshafen (DE)

(72) Erfinder: Hambrecht, Juergen, Dr., Werderstrasse 30,
D-6900 Heidelberg (DE)
Erfinder: Naarmann, Herbert, Dr., Haardtblick 15,
D-6719 Wattenheim (DE)
Erfinder: Muench, Volker, Dr., Luitpoldstrasse 114,
D-6700 Ludwigshafen (DE)
Erfinder: Brandt, Hermann, Dr., Vogelgartenstrasse 50,
D-6707 Schifferstadt (DE)
Erfinder: Swoboda, Johann, Dr., Neuwiesenstrasse 28,
D-6700 Ludwigshafen (DE)

## Beschreibung

Die Erfindung betrifft ein Verfahren zur Herstellung hochmolekularer Polyphenylenether aus einwertigen Phenolen, die in den beiden ortho-Stellungen oder zusätzlich in einer meta-Position, nicht aber in der para-Stellung Alkylsubstituenten aufweisen, durch oxidative Kupplungsreaktion mit Sauerstoff bei Temperaturen zwischen 10 und 45°C in Anwesenheit eines Katalysatorkomplexes aus einem Kupfersalz und einem organischen Amin in Gegenwart eines aromatischen $C_7$- bis $C_{10}$-Kohlenwasserstoffs als Lösungsmittel im Bereich von 1:1 bis 20:1 Gewichtsteilen, bezogen auf das monomere Phenol und gegebenenfalls eines Aktivators und Abtrennung des Metallkatalysators auf der Polyphenylenetherlösung durch Zugabe einer komplexbildenden Verbindung.

Polyphenylenether, die manchmal als Poly(phenylenoxide) bezeichnet werden, sind als allgemeine Klasse von Verbindungen eine außerordentlich interessante Gruppe relativ neuer Polymerer. Diese Polymeren, sowohl Homo- als auch Copolymere und Verfahren zu deren Herstellung sind in US-A-3 306 874, 3 306 875 und 3 432 466 offenbart. Abwandlungen des Verfahrens zum Herstellen dieser Polymerer sind in US-A- 3 384 619, 3 639 656, 3 642 699, 3 661 848 und 3 733 299 beschrieben. Die erhaltenen Polyphenylenether sind hitzefeste Stoffe und als Abmischungskomponenten für Polystyrole geeignet.

Die zur Herstellung der Polyphenylenether am häufigsten angewendeten Verfahren umfassen die Selbstkondensation einwertiger Phenole durch Einwirkung von Sauerstoff in Gegenwart von Katalysatoren. Als Katalysatoren werden bevorzugt Metall-Amin-Komplexe, insbesondere Kupfer-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschiet durch die Verwendung von wäßrigen Lösungen von anorganischen oder organischen Säuren, wie es z.B. in der DE-A- 21 05 372 beschrieben ist. Verwendet werden auch Polycarbonsäuren und/oder Polyaminocarbonsäuren (vgl. DE-A- 23 64 319) oder andere Chelatisierungsmittel wie Nitrilotriessigsäure und ihre Natriumsalze (vgl. DE-C- 25 32 477), letztere auch in Kombination mit quartären Ammoniumsalzen (vgl. US-A- 4 026 870). Beschrieben ist auch die Katalysatorabtrennung mit Hilfe von komplexbildenden Mitteln aus der Gruppe des Bisguanids (vgl. DE-A- 24 60 325). Neben dem Abbrechen der oxidativen Selbstkondensation hat die Zugabe des komplexbildenden Agens auch die möglichst vollständige Entfernung des Katalysators aus dem Polyphenylenether zum Ziel, da Verunreinigungen des Polymeren durch Metallreste zu einer Verschlechterung des gesamten Eigenschaftsbildes des Polymeren führen. Insbesondere die Oxidationsempfindlichkeit und die Eigenfarbe werden betroffen.

Allen diesen Verfahren gemeinsam ist, daß der bisher ausgeübte Reaktionsweg samt der Katalysatorabtrennung zu lange Reaktionszeiten erfordert, um höhermolekulare Polykondensate zu erzeugen und, daß die Abtrennung des Cu-Katalysators nach der Polymerisation, insbesondere bei höhermolekularen Polykondensaten, wegen Phasentrennproblemen äußerst schwierig ist. Schließlich enthalten sämtliche nach bisher bekannt gewordenen Verfahren hergestellte Polyphenylenether in nicht tolerierbaren Mengen C-C-gekoppelte Nebenprodukte. Diese Nebenprodukte, wie z.B. das 3, 3', 5, 5'-Tetramethyldi-phenochinon, sind stark gelb gefärbt und führen zu einer deutlichen Gelbfärbung der resultierenden Polymerisate.

Es ist auch bereits aus der Literaturstelle "Chemical Abstracts", Band 72, 1970, Nr. 56083 h bekannt, zur Herstellung hochmolekularer Polyphenylenether ein Monophenol einzusetzen, das eine Reinheit von 99,8 % aufweist. Aus dieser Druckschrift geht aber nicht hervor, ob die durch den verwendeten Katalysatorkomplex aus Kupferchlorid und Pyridin im Polyphenylenether vorhandenen Verunreinigungen abgetrennt werden und ob eine gegebenenfalls vorzunehmende Abtrennung des Katalysatorsystems aus der Polyphenylenetherlösung durch die Verwendung des Phenols mit einem Reinheitsgrad von 99,8 % erleichtert wird.

Der Erfindung lag deshalb die Aufgabe zugrunde, ein Polymerisationsverfahren zu entwickeln, das die oben aufgezeigten Nachteile nicht oder nur in abgeschwächter Form aufweist.

Diese Aufgabe wird erfindungsgemäß dadurch gelöst, daß das di- oder trisubstituierte Phenol weniger als 0,2 Gew.%, bezogen auf das einwertige Phenol, an Phenol, monosubstituierten Phenolen und mehrkernigen Phenolen enthält. Nach einer bevorzugten Verfahrensweise wird das für die Polymerisation vorgesehene einwertige Phenol mit einem o-Kresol- und p-Kresol-Anteil von jeweils weniger als 0,1 Gew.% eingesetzt. Besonders bevorzugt wird ein einwertiges Phenol der oxidativen Kupplung unterzogen, das weniger als 0,05 Gew.% o-Kresol und weniger als 0,01 Gew.% p-Kresol enthält. Insbesondere bevorzugt ist ein Verfahren, bei dem Phenol, m-Kresol und mehrkernige Phenole zu weniger als 0,02 Gew.% in den Ausgangsstoffen enthalten sind.

Unter hochmolekularen Polyphenylenethern werden die durch oridative Kupplung von 2,6-Dialkylphenolen zu einer Kette alkylsubstituierter, in para-Stellung durch Sauerstoffatome etherartig gebundene Benzolringe verstanden. Die Polymeren weisen Molekulargewichte von 10 000 bis 90 000, bevorzugt 20 000 bis 70 000, bestimmt nach der in "Macromolecular Syntheses" 1 (1978), Seite 83 beschriebenen Methode, auf. Hochmolekulare Polyphenylenether sind an sich aus der Literatur seit längerem bekannt (vgl. z.B.

US-A- 3 661 848 3 219 625 oder 3 378 505), so daß sich hier eine weitere Beschreibung erübrigt.

Die zur Herstellung der hochmolekularen Polyphenylenether verwendeten einwertigen Phenole, die in den beiden ortho-Stellungen, nicht aber in der para-Stellung Alkylsubstituenten aufweisen, sind übliche Phenole wie 2,6-Diumethylphenol, 2,6-Diethylphenol, 2-Methyl-6-ethylphenol, 2-Methyl-6-propylphenol, 2,6-Dibutylphenol, 2, 3, 6-Trimethylphenol sowie Gemische dieser Phenole.

Zur Ausführung der Polykondensation wird üblicherweise Sauerstoff in die 10 bis 45, vorzugsweise 15 bis 22°C warme Lösung des Monomeren in Gegenwart eines Katalysatorkomplexes eingeleitet. Die Sauerstoffdurchflußgeschwindigkeit ist im wesentlichen die gleiche, wie sie in den US-A-3 306 674 und 3 306 875 beschrieben ist.

Bei dem für die Polykondensation bekannten Katalysatorkomplex handelt es sich um eine Kombination aus einem Amin, z.B. Dibutylamin, Diethylamin, Picolin, Chinolin, Pyridinbasen, Triisopropylamin, Dimethylisopropanolamin, Triethanolamin, Triisopropanolamin oder Diisopropanolamin mit einem Kupfersalz, wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt üblicherweise bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1, d.h. maximal bis zu einem Überschuß des 20-fachen an Lösungsmittel, bezogen auf das Monomere. Nach anmeldungsgemäßen Verfahren soll als Lösungsmittel ein aromatischer $C_7$- bis $C_{10}$-Kohlenwasserstoff verwendet werden. Geeignete Kohlenwasserstoffe sind insbesondere Ethylbenzol, Xylol, Diethylbenzol oder deren Gemische, wobei vorzugsweise Ethylbenzol oder Toluol verwendet werden. Die Lösungsmittel werden bevorzugt im Bereich von 1:1 bis 10:1 Gewichtsteile, bezogen auf das monomere Phenol eingesetzt.

Darüber hinaus kann die Reaktionsmischung einen Aktivator wie ein Diarylguanidin oder ein Diarylformamidin enthalten (vgl. US:A- 3 544 515).

Beim anmeldungsgemäßen Verfahren wird die Polykondensationsreaktion vorzugsweise bei Temperaturen zwischen 15 und 22°C, durchgeführt. Hierzu wird der Sauerstoff in die 15 bis 22°C warme Lösung des Monomeren in Gegenwart des erfindungsgemäßen Aminkomplexes eingeleitet. Die Reaktion ist in kurzer Zeit beendet, d.h. das Katalysatorgemisch wird in 0,1 bis 1,5 Stunden in die Monomerlösung unter Sauerstoff- oder Luftbegasung eindosiert.

Wenn die Polykondensation die gewünschte Ausbeute und das Polymere das gewünschte Molekulargewicht erreicht hat, enthält die Reaktionslösung 1 bis 30 Gew.% Polyphenylenether, 0,005 bis 1,5 Gew.% Metallionen und etwa 0,1 bis 6,0 Gew.% Amin sowie gegebenenfalls geringe Mengen anderer Materialien. Diese Reaktionslösungen werden mit komplexbildenden Verbindungen, wie z.B. den Natriumsalzen der Ethylendiamintetraessigsäure, der Nitrilotriessigsäure oder anderer Polyaminocarbonsäuren zur Abtrennung des im Polymeren enthaltenen Metallkatalysators behandelt. Die Art und Weise der Zugabe der Komplexierungsmittel ist dabei unkritisch. So können die komplexbildenden Verbindungen in Substanz ebenso wie in wäßriger Lösung in Form ihrer Alkali- oder Erdalkalisalze hinzugegeben werden. Die Zugabe kann auf einmal oder in mehreren Anteilen, kontinuierlich oder dis-Kontinuierlich, mit und ohne zuzätzliches Wasser erfolgen. Die Abtrennung der Metallkomponente kann dabei in geeigneten Verfahrensvorrichtungen, wie z.B. in Filterpressen, in Dekantationstanks, Schälzentrifugen und ähnlichem vorgenommen werden.

Die Kontaktzeit des komplexbildenden Agens mit der kataklsatorhaltigen Polyphenylenether-Phase kann innerhalb weiter Grenzen variieren. Bevorzugt werden Reaktionszeiten von 1 Minute bis 5 Stunden. Häufig genügen Reaktionszeiten von 5 bis 30 Minuten. Die bevorzugte Reaktionstemperatur liegt zwischen 25 und 80°C, es sind jedoch auch Temperaturbereiche darunter und darüber anwendbar.

Die Abtrennung der Metallkatalysatoren bis zur vollständigen Entfernung aus dem Polyphenylenether-Polymeren kann durch mehrfache Zugabe der komplexbildenden Verbindung und anschließende Abtrennung der resultierenden Metallkomplexe gemäß der bereits beschriebenen Verfahren erfolgen. Bevorzugt wird jedoch eine Ausführungsform der Erfindung, wonach die gesamte Katalysatormenge in einem Komplexier- und Separierschritt aus dem Polymeren entfernt wird.

Erfindungsgemäß wird ein einwertiges Phenol, bevorzugt 2,6-Dimethylphenol, das nach den in der Literatur (vgl. Houben-Weyl-Müller, Methoden der organischen Chemie, Phenole, Teil 2, Band 6/1 C, Georg Thieme Verlag, Stuttgart, 1976, S. 1187 f u.d.zit.Lit.) beschriebenen Methoden von den bei der Polymerisation störenden Phenolen, wie Phenol, o-Kresol, p-Kresol, m-Kresol und den mehrkernigen Phenolen, wie 2,6-Dimethyl-1-Hydroxydiphenyl, abgetrennt wird, eingesetzt.

Wie bereits erwähnt, ist ein wesentliches Merkmal des vorliegenden Verfahrens die Abtrennung des Katalysatorsystems aus den Polyphenyleneherlösungen. Besondere Probleme treten hierbei vor allem bei höhermolekularen Polykondensaten auf, die aus nicht erfindungsgemäßen Monomeren hergestellt werden. Insbesondere die Anwesenheit von mehrkernigen Phenolen und p- und o-Kresol führen zu Froblemen bei der Phasentrennung von organischer, polyphenylenetherhaltiger Lösung und wäßriger, das Komplexierungsagens enthaltenden Lösung. Häufig tritt eine starke Mulmschicht an der Phasengrenzfläche auf, die sich auch nach mehrstündigem Stehen nicht auflöst und die eine möglichst weitgehende Abtrennung des Cu-Katalysators aus der organischen Phase unmöglich macht. Polyphenylenetherlösungen, die aus dem erfindungsgemäßen Monomerengemisch erzeugt werden, weisen diese Nachteile nicht auf.

Nach der Entfernung der metallischen Komponente als Komplex kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z.B. der Polyphenylenether durch Ausfällen aus einer Reaktionslösung mittels einem Antilösungsmittel, wie beispielsweise einem Überschuß von einem Alkohol, z.B. Methanol, isoliert werden. Das filtrierte Produkt kann im Alkohol aufgeschlämmt und - falls gewünscht - mit einem Entfärbungsmittel gerührt werden und dann wird der Polyphenylenether abfiltriert und nach herkömmlichen Verfahren in Filme, Fasern, ausgeformte Gegenstände und dgl. umgewandelt. Andere Alkohole wie Isopropanol, Propanol oder Ethanol können ebenfalls verwendet werden.

Die Aminkomponente des Katalysators kann durch Destillation oder nach anderen herkömmlichen Verfahren zurückgewonnen werden.

Wie bereits erwähnt, ist ein bevorzugter Aspekt des vorliegenden Verfahrens die Herstellung von Polyphenylenetherlösungen mit niedrigem Metallgehalt, aus denen die polymeren Stoffe nach sog. Totalisolationsverfahren, z.B. durch Sprühtrocknung, Dampfausfällung und Heißwasserzerkrümelung, gewonnen werden können. Dies erleichtert die wirtschaftliche Anwendung solcher Verfahren, die hinsichtlich dem erforderlichen Energie, dem Lösungsmittelverlust und dgl. wirtschaftlicher sind als die bekannten Ausfällungsverfahren.

Die mit dem erfindungsgemäßen Verfahren erzielbaren Vorteile bestehen insbesondere darin, daß mit Hilfe der erfindungsgemäßen Monomerengemische bei der oxidativen Kupplung in kurzen Reaktionszeiten hohe Polymerisationsgrade erzielt werden und daß hierbei der Anteil an C-C-gekuppelten Nebenprodukten, wie z.B. von 3, 3', 5, 5'-Tetramethyldiphenochinon, das bei der oxidativen Kupplung von 2,6-Dimethylphenol entstehen kann, sehr gering ist und daß bei der Abtrennung des Cu-Katalysators im Anschluß an die Polymerisation keine Phasentrennprobleme auftreten und damit der Rest-Cu-Gehalt in den resultierenden Polyphenylenetherlösungen sehr niedrig liegt.

Die folgenden Beispiele dienen dazu, die Erfindung zu illustrieren, ohne daß damit eine Begrenzung der Erfindung beabsichtigt ist. Die angegebenen Teile sind Gewichtsteile, es sei denn, es ist anders angegeben.

Die Intrinsikviskosität wird durch Messung an 0,5 %igen Lösungen in Chloroform bei 30°C bestimmt.

**Beispiele**

Herstellung von Poly-(2,6-dimethyl-1,4-phenylen)-ether.

Eine Vorlage von 1,3 g Cu-I-Bromid und 20 g 1,4-Dimethylpentylamin und 2 g 2,6-Dimethylphenol der in Tabelle 1 angegebenen Spezifikation, wird bei 20°C 5 Minuten unter Einleiten von Sauerstoff gerührt und dann wird im Verlauf von 30 Minuten in eine Lösung von 204 g DMP in 1400 Toluol eindosiert. Anschließend wird noch 1 Stunde bei 20°C gerührt. Die Reaktion wird in Gegenwart von 30 Liter Sauerstoff pro Stunde durchgeführt.

Zur Reinigung der Polymerlösung werden 4,0 g Ethylendiamintetraessigsäure (vgl. Beispiel 1, DE-A-2 364 329) hinzugegeben und die Polymerlösung eine weitere Stunde bei 50°C gerührt. Die Polymerlösung wird 5 Minuten bei 500 UPM zentrifugiert und die organische Phase abgetrennt. Das Polymere wird durch Zugabe von Methanol ausgefällt. Nach dem Trocknen ergeben sich für das Polyphenylenoxid die in Tabelle 1 angegebenen Werte.

Tabelle 1

| Beispiel | | 2,6-Dimethylphenolspezifikation[1] | | | | | Polyphenylenether | | |
| | Phenol | o-Kresol | p-Kresol | m-Kresol | mehr-kernige Phenole | [n] | $\frac{(dl)}{g}$ | Rest-Cu[2] | Dipheno-chinon[3] |
|---|---|---|---|---|---|---|---|---|---|
| 1 (nicht erfin-dungsgemäß) | 0,1 | 1,00 | 0,10 | 0,001 | 0,1 | 0,6 | | 78 | 0,45 |
| 2 (nicht erfin-dungsgemäß) | 0,1 | 0,10 | 1,0 | 0,001 | 0,1 | 0,3 | | 62 | 0,38 |
| 3 (nicht erfin-dungsgemäß) | 0,01 | 0,05 | 0,05 | 0,001 | 0,5 | 0,6 | | 134 | 0,41 |
| 4 | 0,001 | 0,03 | 0,01 | 0,001 | 0,02 | 0,8 | | 25 | 0,22 |
| 5 | 0,001 | 0,04 | 0,001 | 0,001 | 0,02 | 0,8 | | 24 | 0,18 |
| 6 | 0,001 | 0,01 | 0,005 | 0,001 | 0,02 | 0,8 | | 24 | 0,15 |
| 7 | 0,001 | 0,01 | 0,001 | 0,001 | 0,01 | 0,9 | | 12 | 0,17 |

[1] Gew. %, bezogen auf das eingesetzte 2,6-Dimethylphenol
[2] Rest-Cu-Gehalt in mg/kg, bezogen auf den Polyphenylenether
[3] Gew. %, bezogen auf die toluolische Polyphenylenether-Lösung

**Patentansprüche**

1. Verfahren zur Herstellung hochmolekularer Polyphenylenether aus einwertigen Phenolen, die in den beiden ortho-Stellungen oder zusätzlich in einer meta-Position, nicht aber in der para-Stellung Alkylsubstituenten aufweisen, durch oxidative Kupplungsreaktion mit Sauerstoff bei Temperaturen zwischen 10 und 45° C, in Anwesenheit eines Katalysatorkomplexes aus einem Kupfersalz und einem organischen Amin in Gegenwart eines aromatischen C7- bis C10-Kohlenwasserstoffs als Lösungsmittei im Bereich von 1:1 bis 20:1 Gewichtsteilen, bezogen auf das monomere Phenol, und gegebenenfalls eines Aktivators, und Abtrennung des Metallkatalysators aus der Polyphenylenetherlösung durch Zugabe einer komplexbildenden Verbinduno, dadurch gekennzeichnet, daß das di- oder trisubstituierte Phenol weniger als 0,2 Gew.%, bezogen auf das einwertige Phenol, an Phenol, monosubstituierten Phenolen und mehrkernigen Phenoien enthält. 2. Verfahren gemäß Anspruch 1, dadurch gekennzeichnet, daß die monosubstituierten Phenole o-Kresol und p-Kresol jeweils in Mengen unter 0,1 Gew.% enthalten sind.

3. Verfahren gemäß Anspruch 1, dadurch gekennzeichnet, daß o-Kresol zu weniger als 0,05 und p-Kresol zu weniger als 0,01 Gew.% enthalten sind.

4. Verfahren gemäß Ansprüchen 1 bis 3, dadurch gekennzeichnet, daß Phenol, m-Kresol und mehrkernige Phenole zu weniger als 0,02 Gew.% enthalten sind.

**Claims**

1. A process for the preparation of a high molecular weight polyphenylene ether from a monohydric phenol, which is alkyl-substituted at the two ortho-positions but not at the para-position and may or may not be alkyl-substituted at the meta-position, by an oxidative coupling reaction with oxygen at from 10 to 45° C in the presence of a catalyst complex obtained from a copper salt and an organic amine, and in the presence of from 1 to 20 parts by weight of an aromatic C7-C10-hydrocarbon, as solvent, per part by weight of the monomeric phenol, and in the presence or absence of an activator, and isolation of the metal catalyst from the polyphenylene ether solution by adding a complex-forming compound, wherein the di- or trisubstituted phenol contains less than 0.2% by weight, based on the monohydric phenol, of phenol, monosubstituted phenols and polyhydric phenols.

2. A process as claimed in claim 1, wherein the monosubstituted phenols o-cresol and p-cresol are each present in an amount of less than 0.1% by weight.

3. A process as claimed in claim 1, wherein o-cresol and pcresol are present in amounts of less than 0.05% by weight and of less than 0.01% by weight respectively.

4. A process as claimed in claims 1 to 3, wherein phenol, mcresol and polyhydric phenols are each present in an amount of less than 0.02% by weight.

9 **0 091 055** 10

## Revendications

1. Procédé de préparation de poly(éthers de phénylène) à poids moléculaire élevé à partir de phénols monovalents, substitués dans les deux positions ortho et éventuellement aussi dans une position méta, mais non en position para, par des radicaux alkyle, par une réaction de copulation oxydante avec l'oxygène à des températures comprises entre 10 et 45°C, en présence d'un complexe catalytique d'un sel du cuivre et d'une amine organique, d'un hydrocarbure aromatique en $C_7$ à $C_{10}$ comme solvant dans des proportions (parties en poids) comprises entre 1 : 1 et 20 : 1 par rapport au phénol monomère et éventuellement d'un activateur, suivie de la séparation du catalyseur de métal de la solution du poly(éther de phénylène) par l'addition d'un composé formant un complexe, caractérisé en ce que le phénol di- ou tri-substitue contient moins de 0,2 % en poids par rapport au phénol monovalent de phénol, de phénols mono-substitués et de phénols polycycliques.

2. Procédé suivant la revendication 1, caractérisé en ce que les phénols mono-substitués o-crésol et p-crésol sont chacun présents en une proportion inférieure à 0,1 % en poids.

3. Procédé suivant la revendication 1, caractérisé en ce que la teneur en o-crésol est inférieure à 0,05 % et celle du p-crésol inférieure à 0,01 % en poids.

4. Procédé suivant les revendications 1 à 3, caractérisé en ce que la teneur en phénol, en m-crésol et en phénols polycycliques est inférieure à 0,02 % en poids.

6